Europäisches Patentamt

European Patent Office

Office européen des brevets

(11) Publication number: **0 457 949 A1**

## EUROPEAN PATENT APPLICATION

(21) Application number: 90109879.8

(22) Date of filing: 23.05.90

(51) Int. Cl.5: **G03B 27/20**

(43) Date of publication of application:
27.11.91 Bulletin 91/48

(84) Designated Contracting States:
DE DK ES FR GB IT

(71) Applicant: **BURGESS INDUSTRIES, INC**
13305 Water Tower Circle
Plymouth, MN 55441(US)

(72) Inventor: **Campbell, William J.**
14524 Idylwood Road
Minnetonka, MN 55345(US)

Inventor: **Saldenais, Arvids**
12008 Maryland Court No.
Champlin, MN 55316(US)
Inventor: **Burgess, Dennis A.**
325 Lakeview Avenue
Tonka Bay, MN 55331(US)

(74) Representative: **Neidl-Stippler, Cornelia, Dr. et al**
Neidl-Stippler & Partner Rauchstrasse 2
W-8000 München 80(DE)

(54) **Vacuum contact copier.**

(57) The invention provides a contact photocopying apparatus 10 which includes a supporting frame 12 and a cover 14 adapted to be raised and lowered with respect to the supporting frame 12. A flexible sealing sheet 30 is bonded at its edges to the supporting frame 12. A cushion 34 is secured beneath the sealing sheet 30. The cushion 34 is formed from elastic material and has a smoothly contoured semi-cylindrical top surface. A firm backing plate 40 is connected to the lower surface of the cushion 34. The flexible sealing sheet 30 has a free edge portion 52 which extends beyond the edges of the cushion sheet 34. A flexible reinforcing strip or band 50 is provided which has one portion connected to the free edge 52 of the sealing sheet 30 and another portion connected to the edge of the cushion 34 to permit flexing of the free edge portion 52 of the sealing sheet 30 with respect to the cushion 34. The flexible sealing sheet 30 extends across an opening 40a in the backing plate 40 to define a flexible diaphragm 30a. A vacuum line 56 is connected to the center of the diaphragm 30a and is suppored by it for limited movement. A stop member 58 is operatively associated between the vacuum line 56 and the backing plate 40 to limit the motion of the vacuum line 56 toward the cover 14 when a vacuum is created in the chamber 24. A sealing strip 60 is provided around the edge of the supporting frame 12 having at least one inclined cantilevered sealing flange 62 which slopes outwardly and is adapted during operation to flex outwardly and downwardly when engaged by the cover 14 to seal the edge of the vacuum chamber 24.

FIG. 1

## FIELD OF THE INVENTION

The invention relates to photocopying apparatus and more particularly to equipment in which superimposed sheets of graphic material are exposed to light within a vacuum chamber.

## BACKGROUND OF THE INVENTION

The vacuum chamber of copying equipment of the type described sometimes leaks, primarily because the seal fails. Another problem is the tendency for the cushioning material placed against the original and copy sheet to apply pressure to the graphic material preferentially along a series of lines or at different points. In the course of developing the present invention, it was discovered that this can interrupt the smooth, progressive transfer of air from one end of the vacuum chamber to the other. The edges of a sealing membrane which forms the bottom of the chamber are also sometimes damaged or weakened during use. In addition, when vacuum is applied one end of the vacuum line can be sucked forcefully into the chamber, causing damage to the cover or the sealing sheet.

In view of these problems, it is one objective of the present invention to provide an improved vacuum copier which is reliable in operation over an extended period of time and which permits more rapid and thorough evacuation of air and better contact between a tracing or other original sheet and a copy sheet. Another object is to find a way to provide more uniform and continuous advancement of a moving line of contact between the graphic material as it advances from one edge of the chamber to the other when air is progressively removed from the chamber containing them, to permit the free edges of the flexible sealing sheet to flex easily and still remain bonded to a sheet of cushioning material mounted behind it, and to provide a more reliable seal at the edges of the vacuum chamber. A further objective is to find a way of providing limited articulation between the vacuum line connection and the vacuum plate.

## SUMMARY OF THE INVENTION

The invention provides a contact copying apparatus which includes a supporting framework and a cover adapted to be raised and lowered with respect to the supporting framework. A flexible sealing sheet is bonded at its edges to the supporting framework. A cushion is secured beneath the sealing sheet. The cushion is formed from elastic material and has a smoothly contoured, for example semi-cylindrical, top surface which is free of projections. A firm backing plate is connected to the lower surface of the cushion. The flexible sealing sheet has a free edge portion that extends beyond the edges of the cushion sheet. A flexible reinforcing band is preferably bonded between the free edge of the sheet and the cushion. Specifically, one portion of the band is bonded to the free edge of the sealing sheet and another portion is bonded to the edge of the cushion to permit the free edge of the sealing sheet to flex with respect to the cushion.

The backing plate below the cushion has at least one opening for a vacuum line. The flexible sealing sheet extends across the opening to define a diaphragm aligned with the opening. The vacuum line is connected to the center of the diaphragm and is supported thereby for limited movement and/or articulation. A stop member is operatively associated between the vacuum line and the backing plate to limit the motion of the vacuum line toward the cover when a vacuum is applied to the chamber between the cover and the sealing sheet.

A sealing strip is provided around the edge of the supporting framework. The sealing strip has at least one inclined cantilevered sealing flange which slopes outwardly and is adapted during operation to flex outwardly and downwardly when engaged by the cover to reliably seal the edge of the vacuum chamber.

## THE FIGURES

Figure 1 is a perspective view of the invention with the top frame member in a elevated position ready to receive a superimposed original and copy sheet;

Figure 2 is similar to Figure 1 with the top frame member in its closed position ready for exposuring the sheets to light;

Figure 3 is a vertical sectional view taken on line 3-3 of Figure 1;

Figure 4 is a bottom view of the apparatus partly in section with the supporting framework removed;

Figure 5 is a side view of the apparatus with the cover raised;

Figure 6 is a view similar to Figure 5 with the cover lowered;

Figure 7 is a partial perspective view of the rear portion of the apparatus on an enlarged scale showing one of the hinges;

Figure 8 is a transverse sectional view taken on line 8-8 of Figure 11 on an enlarged scale;

Figure 9 is a vertical sectional view taken on line 9-9 of Figure 11 on an enlarged scale;

Figure 10 is a view similar to Figure 9 taken on line 10-10 of Figure 11; and

Figure 11 is a plan view of the apparatus with the cover lowered.

## DETAILED DESCRIPTION

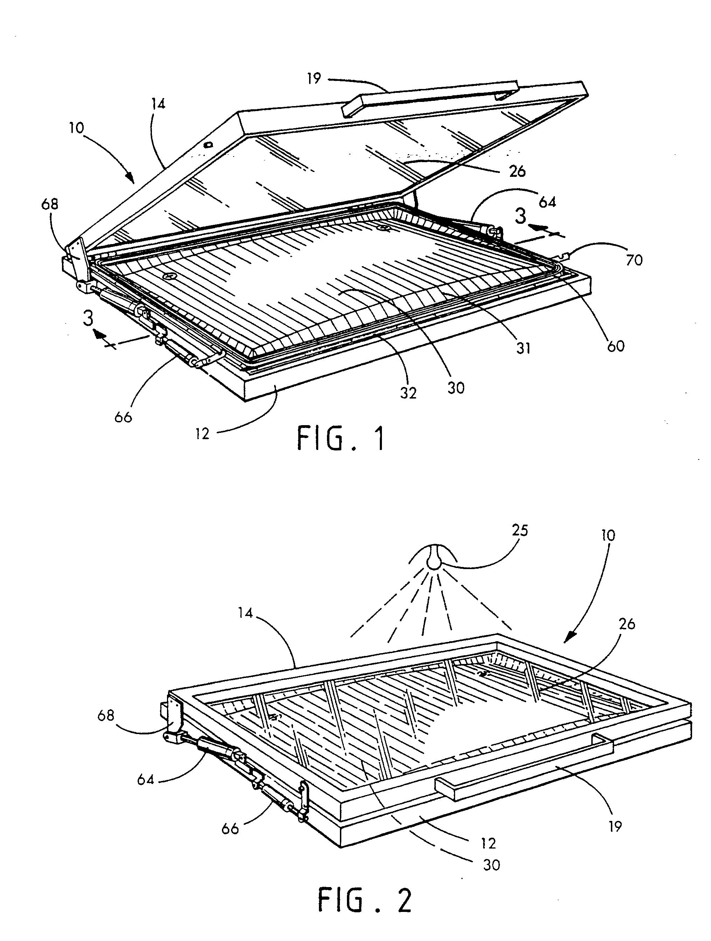

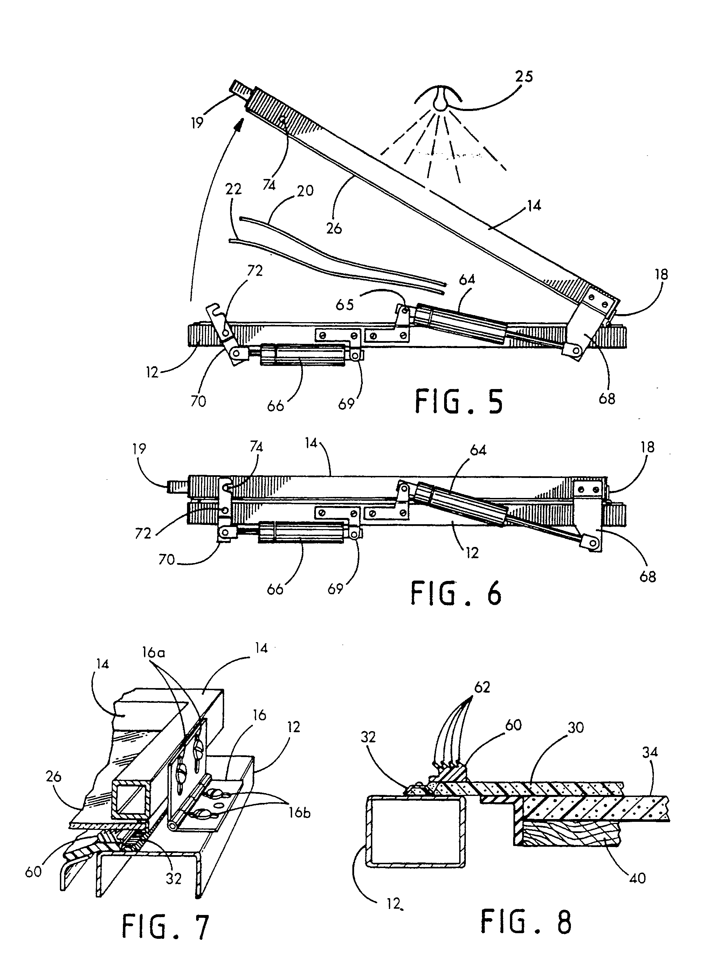

Shown in the figures is a vacuum frame 10 for a contact copy apparatus having a supporting framework 12 composed of four steel tubes of rectangular cross-section connected together at their ends to form a rigid rectangular supporting structure. A rectangular cover frame 14 of the same size and shape also composed of a rectangular frame formed from square steel tubes is supported above the supporting framework 12 by means of a pair of laterally spaced apart hinges 16 and 18. A handle 19 at the front of the cover allows the cover to be raised and lowered manually (when manual operation is desired) by pivoting the cover upon hinges 16 and 18 as required for the insertion of a pair of superimposed sheets of graphic material 20 and 22 (including an original sheet and a copy sheet) into a vacuum chamber 24 beneath the cover 14. A center portion of the cover 14 consists of a transparent glass plate 26 which is secured to the edge portion of the frame of cover 14 at its edges so that when the cover is raised the glass plate 26 is elevated to the position shown in Figures 1 and 5. After the sheets 20, 22 are inserted, the cover 14 is lowered from the position of Figures 1 and 5 to the closed position of Figures 2 and 6, a vacuum is applied to the chamber 24 containing the sheets, and a light 25 at the top of the apparatus is turned on to transfer an image from the graphic original sheet 20 to the copy sheet 22.

A strong but flexible sealing membrane or sheet 30 is connected at its edges to the supporting frame 12. This can be accomplished by means of a clamping strip 32 (Figures 7 and 8). The sealing sheet 30 can be composed of any suitable strong flexible material such as a sheet of 6 mm thick closed cell neoprene foam to which is bonded a synthetic cloth such as nylon cloth on at least one surface. One suitable sheet material can be obtained from Rubatex, Inc. of Bedford, Virginia, U.S.A.

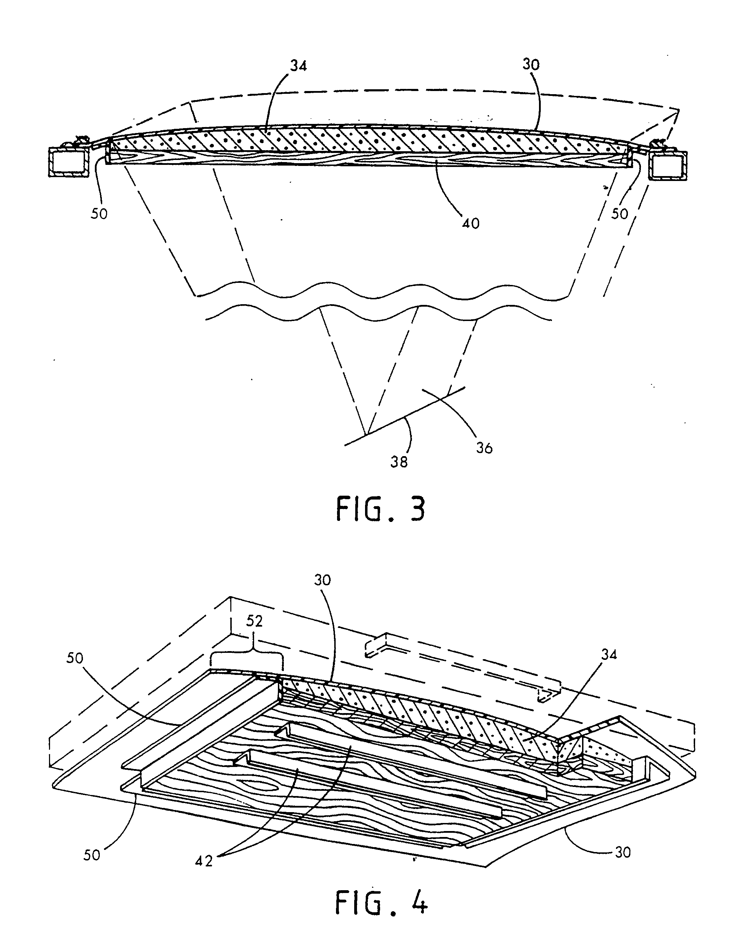

Secured to the lower surface of the sealing sheet 30 is a cushion 34 formed from elastic material such as foam rubber having a smoothly contoured semi-cylindrical projection-free top surface. The cushion 34 is thicker at its center than at its edges and is defined as shown in Figure 3 by one edge of a rectangle 36 rotated around an opposite edge 38 as a center axis.

A firm backing plate 40 is secured below the cushion 34. The backing plate can be formed from metal, composition board, plywood or the like. It is provided with a plurality of laterally extending parallel vertically disposed reinforcing ribs 42 to prevent it from deflecting at the center when vacuum is applied. Each reinforcing rib 42 can comprise one web of a metal angle iron fastened to the lower surface of the backing plate 40.

As shown in Figures 3, 4 and 8-10, a flexible reinforcing strip or band 50 formed from flexible sheet material such as a strong rubberized fabric is bonded around at least the sides and back of the cushion 34 and the backing plate 40, e.g. as shown in Figure 4. The reinforcing band 50 includes an upper horizontal portion that is bonded to a free edge portion 52 of the sheet 30. The band 50 also includes a vertical portion that is bonded to at least three edges of the cushion 34 and backing plate 40. The reinforcing band 50 has been found highly effective in permitting the free edge portion 52 of the sealing sheet 30 to flex easily without delamination from the cushion 34.

As shown in Figure 7, the hinges 16 are provided with vertical positioning means comprising slots 16a for the cover 14 and horizontal positioning means comprising slots 16b for the supporting frame 12. Fasteners such as socket head cap screws can be moved up or down in slots 16a and then tightened to control the compression of the cover 14 against sealing strips 60, while the movement of the cap screws within slots 16b can be used to center the cover 14 with respect to the supporting framework 12 of the sealing strip 60. In this way the hinges 16, 18 allow both the height of the cover 14 to be changed so as to control compression of the sealing strip 60 evenly on all sides of the cover 14 and to make sure that the strip 60 is in sealing engagement with the cover along each edge of the cover.

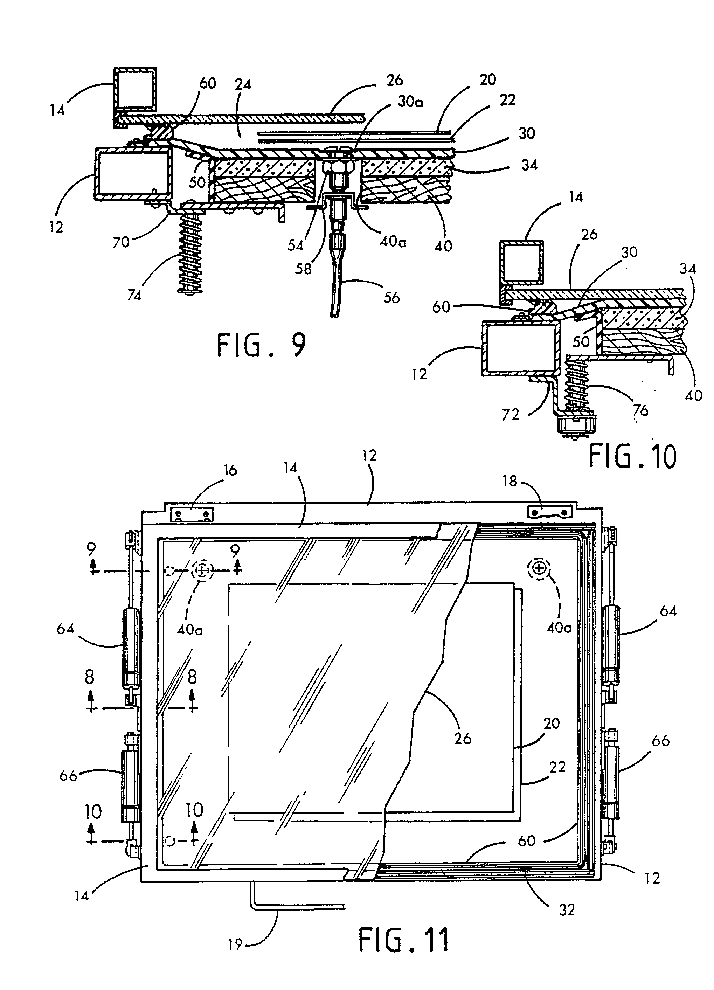

Refer now to Figure 9. It will be seen that the backing plate 40 and the cushion 34 are provided with a circular opening 40a. In practice, two such openings are provided as shown in Figure 11, near each side edge of the apparatus. The flexible sealing sheet 30 extends across the opening to define an unsupported diaphragm portion 30a (Figure 9) of circular shape to which is secured a vacuum connection 54 for introducing vacuum from vacuum line 56 through the connection 54 into the chamber 24. The vacuum line connection 54 is secured to the diaphragm 30a at or near its center. This provides the connection 54 with flexible support allowing it limited movement and/or articulation along with the attached portion of the diaphragm 30a. A stop member 58 is secured to the connector 54 and extends laterally on each side thereof to operatively engage the lower surface of the backing plate 40 for the purpose of limiting the upward movement of the connector 54 toward the glass plate 26. As a result, when vacuum is established in the chamber 24, the connector 54 is able to move upwardly in response to the applied vacuum within chamber 24, but the lateral projections of the stop member 58 upon striking the backing plate 40 will prevent damage caused by the connector 54 rising up too far within the chamber 24.

Secured around the periphery of the upper surface of the sealing sheet 30 is an elastic sealing strip 60 as shown in Figure 8. The strip 60 includes at least one and preferably a plurality of inclined cantilevered and mutually aligned sealing flanges 62 which slope outwardly, i.e. away from the center of the apparatus. Consequently, when engaged by the cover as shown in Figure 6, the sealing flanges 62 are adapted to bend or flex outwardly and downwardly to provide a reliable leakproof seal as they are compressed beneath the cover. The outward and downward compression of the flanges promotes the formation of a large contact area between the strip 60 and the cover 14. Ambient air pressure tends to force the flanges 62 upwardly into contact with the cover which assists further in promoting a leakproof seal at the edge of the cover 14. The strip 60 can be formed from any suitable elastic material such as a rubber formed from an ethylene propylene diene monomer. The flanges 62 are typically inclined at an angle of between about $40°$ and $70°$ with respect to the flat bottom surface of the strip. Any suitable elastic adhesive can be used between the band 50, cushion 34, sheet 30 and strip 60, such as a rubber-based adhesive, e.g. polystyrene-based contact cement or adhesive sealant.

Connected to the supporting frame 12 (Figures 9 and 10) on each side of the apparatus are brackets 70, 72 to which are secured compression springs 74, 76, respectively, to yieldably bias the backing plate 40 so that its forward edge (the edge closest to the handle 19) is urged upwardly. This facilitates preferential contact between the forward portion 31 of the sealing sheet 30 and the glass portion 26 of the cover 14 prior to evacuation as described in U.S. patent 4,676,633. Springs 74 yieldably bias the rear of the sheet 30 downwardly. As more and more air is removed from the chamber 24, contact between the sealing sheet 30 and the glass portion 26 initially occurs in the forward portion 31 of the sealing sheet 30 (Figure 1) and moves progressively toward the rear in Figures 1 and 2 so that the air is progressively and directionally evacuated with an action which can be thought of as similar to that of a squeegee traveling from the front edge to the rear edge of the sheets. The smooth, semi-cylindrical shape of the cushion and the ease with which the edge portion 52 of the sealing sheet 30 is able to flex has been found to coact with the progressive directional evacuation of the chamber 24 to remove air more effectively in less time and with less tendency for troublesome air pockets to form. Moreover, air can be successfully removed through the connectors 54 which are coupled to the sealing sheet 30, but the articulation of the connectors 54 can not damage the apparatus due to the action of the stop 58.

The cover of the photocopier can be raised and lowered manually with handle 19 and also locked manually in a closed position by means of a suitable latch (not shown) or these operations can be performed by power units as will now be described.

Mounted on each side of the supporting frame 12 as shown best in Figures 5 and 6 are a pair of pneumatic actuator cylinders 64, 66. Cylinder 64 is connected between a stationary pivot 65 on frame 12 and a bracket 68 so that when it is extended, cover 14 will be lowered. Actuator cylinder 66 is connected between a stationary bracket 69 affixed to the frame 12. A latch 70 is pivoted at 72 to the frame 12 so that when cylinder 66 is extended the latch 70 is moved to the locking position of Figure 6 causing a recess at its upper end to engage on a locking pin 74 on each side of the cover 14. In this way pneumatic power can be used to raise and lower the cover 14, and by means of the latch 70 the cover 14 can be locked in the closed position as shown in Figure 6. Air can then be withdrawn from chamber 24 through the vacuum line 56.

Many variations of the present invention within the scope of the appended claims will be apparent to those skilled in the art once the principles described herein are understood.

## INFORMATION DISCLOSURE STATEMENT

Patent 4,676,633 describes a contact copy apparatus with a provision for the evacuation of a chamber. The cushion beneath the sealing sheet is not, however, constructed as described in the present application nor is there a flexible reinforcing band provided between the cushion and the sealing sheet. In addition, vacuum line connectors are not supported upon a diaphragm portion of the sealing sheet for limited movement with a stop means for limiting their upward movement. There are other differences, for example those in in the hinges and in the sealing strip at the periphery of the supporting framework.

## Claims

1. A contact photocopy apparatus for exposing superimposed sheets of graphic material to light while the sheets are held in close contact within a chamber having provision for a progressive directional evacuation of air from the chamber holding the sheets, said apparatus comprising, a supporting frame, a cover including a glass plate adapted to be raised above and lowered onto the supporting frame and for holding the sheets within a chamber there-between, a flexible sealing sheet bonded at its edges to the supporting frame, a cushion adjacent the sealing sheet formed from elastic material and having a smoothly contoured arcuate projection-free top surface, a firm backing plate connected to a lower surface of the cushion, said flexible sealing sheet extending ajacent to the cushion and having a free edge portion extending beyond the edges of the cushion, the backing plate having at least one vacuum line access opening therethrough, the flexible sealing sheet extending across the opening to define a diaphragm aligned with the opening, a vacuum line connected at or near the center of the diaphragm, a member operatively associated between the vacuum line and the backing plate to prevent excessive movement of the vacuum connection and line toward the cover to keep the connection from striking the cover if the connection moves in response to the application of a vacuum within the vacuum frame, means connected to the backing plate to facilitate preferential contact between one edge of the sealing sheet and the cover prior to evacuation whereby the sealing sheet will progressively contact the glass plate over an expanding area as air is removed from the chamber.

2. The apparatus of Claim 1 wherein an elastic sealing strip is connected to an upper exposed surface of the flexible sealing sheet to extend around the periphery thereof, said sealing strip includes at least one inclined cantilevered sealing flange sloped outwardly and being adapted to flex downwardly and outwardly when engaged by the cover to seal the chamber containing the sheets of graphic material between the cover and the sealing sheet.

3. The apparatus of Claim 2 wherein the sealing strip includes a plurality of aligned parallel sealing flanges extending along the length thereof whereby as vacuum is applied beneath the cover each of the flanges bends outwardly and downwardly to form a seal with the cover and ambient air pressure tends to force the free edges of the flanges to pivot upwardly into contact with the cover thereby promoting an airtight seal.

4. The apparatus of Claim 1 wherein a plurality of reinforcing ribs are secured to the backing plate to prevent deflection thereof when vacuum is applied within the chamber.

5. The apparatus of Claim 1 wherein a hinge is connected between the cover and the supporting frame, positioning means is provided in said hinge for allowing changes in the vertical and horizontal position of the cover with respect to the supporting framework.

6. The apparatus of Claim 1 wherein a powered actuator means is operatively connected between the supporting frame and the cover for raising and lowering the cover and a power actuated lock is connected between the cover and the frame for securing the cover in the closed position.

7. The apparatus of Claim 1 wherein the cushion is thicker at the center than at the edges thereof and has the general shape taken by one edge of a rectangle rotated around an opposite edge as a center axis.

8. The apparatus of Claim 1 wherein a flexible reinforcing band is provided having a horizontal portion bonded to the free edge of the sealing sheet and a vertical portion bonded to at least three edges of the cushion to permit flexing of the free edge portion of the sealing sheet with respect to the cushion.

FIG. 1

FIG. 2

FIG. 3

FIG. 4

FIG. 5

FIG. 6

FIG. 7

FIG. 8

8

FIG. 9

FIG. 10

FIG. 11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 676 633  (D.A. BURGESS)<br>* Columns 2-4; figures 1-10 *<br>— — — | 1,4,5,7 | G 03 B 27/20 |
| A | US-A-4 551 016  (R.J. MAHER)<br>* Columns 4-8; figures 1-5 *<br>— — — | 1,4,8 | |
| A | DE-A-3 345 671  (DOUTHITT CORP.)<br>* Pages 9-17; figure 1 *<br>— — — | 1-3 | |
| A | US-A-2 739 516  (E.W. HOSTERMAN)<br>* Columns 3-6; figures 5-8 *<br>— — — | 1 | |
| A | US-A-3 687 546  (E.N. ENDEBROCK)<br>* Columns 4-9; figures 1-3 *<br>— — — — — | 1,5,6 | |

TECHNICAL FIELDS
SEARCHED (Int. Cl.5)

G 03 B 27/20
G 03 B 27/18
G 03 B 27/22
G 03 B 27/60
G 03 B 27/64

The present search report has been drawn up for all claims

| Place of search | Date of completion of search | Examiner |
|---|---|---|
| The Hague | 31 January 91 | BOEYKENS J.W. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
    document